# EUROPEAN PATENT APPLICATION

(11) **EP 1 217 552 A2**
(43) Date of publication of application: **26.06.2002**
(21) Application number: 01310001.1
(22) Date of filing: 29.11.2001
(51) Int. Cl.: G06F 17/30

(54) **Http archive file**

(30) Priority: 30.11.2000 US 726985
(71) Applicant: International Business Machines Corporation, Armonk, N.Y. 10504 (US)
(72) Inventor: Morlitz, David M., c/o IBM United Kingdom Ltd., Winchester, Hampshire SO21 2JN (GB)
(74) Representative: Jennings, Michael John

(57) **Abstract**

An OFFLINE request is sent from the client computer to the Web server. The Web server determines the Web page specified by the <URL> and all the linked (referenced) pages to a depth of <depth>. The Web server determines all graphics, audio clips, and other resources needed for these Web pages, compresses these resources, and creates an archive file containing the compressed resources. Alternatively, the Web server selects a pre- packaged archive file including these compressed resources. The archive file also includes metadata and a site map for the Web site. The archive file is received by the client computer and stored in the client computer's memory, where the archive file can later be decompressed. The archive file allows the client computer to browse the web site off-line and to optimize future requests for resources.

## Description

### FIELD OF INVENTION

The present invention relates to computers and computer systems and, particularly, to a method and system for providing information from a Web server to a Web browser.

### BACKGROUND

The Internet brings a worldwide network of computers together by connecting Web server computers with Web browsers running on client computers. The connection is provided through a communications protocol known as the Transmission Control Protocol/Internet Protocol (TCP/IP). TCP/IP is a packet switching scheme the Internet uses to chop, route, and reconstruct the data it handles.

A Web server is a computer with associated programs that sends resources over the Internet to a matching client computer having a Web browser capable of interpreting the resources and displaying them as Web pages. A resource is some chunk of information, such as graphics or audio files that can be identified by a Uniform Resource Locator (URL), the global address of resources on the World Wide Web. A Web page is a hypertext markup language (HTML) file and one or more resources identified in the HTML file.

The Web browser running on the client computer obtains resources by sending Hypertext Transfer Protocol (HTTP) requests to the Web server. HTTP defines how resources are formatted and transmitted between Web servers and browsers. HTTP also defines what actions Web servers and browsers should take in response to various commands.

HTTP is a stateless protocol. That is, each command is performed independently of previous and subsequent commands. As a result, when a user visits a Web page, the user's Web browser must request each page, graphic, embedded item, or other resource via individual request as the resource is needed. While these requests may be made over the same TCP/IP connection (using persistent connections in HTTP 1.1) each resource request is discrete and separate. For example, a Web browser will typically send the well-known HTTP method "GET" to retrieve each resource. A GET request includes the URL and the version of HTTP being used:
GET <URL> <HTTP Version Used>
From: <user id>
In response to the GET request, the Web server returns the resource identified by the URL. The header "From" is used to identify the client making the request.

When the GET request is used, each resource that the client computer needs from the Web server must be acquired using an individual GET request as the resource is needed. Thus, the Web browser must send a plurality GET requests to retrieve all the necessary resources for a single Web page. As a result, message handling time for both the client computer and the Web server can be high.

In HTTP, resources are acquired strictly on an as-needed basis. There is no method to request bundled resources or to determine that groups of resources are related. Therefore, if a user of the client computer attempts to browse off-line (i.e., attempts to follow links to new Web pages when disconnected from the Internet), the client will be unable to do so because the resources needed for unvisited pages have not been acquired. If the user attempts to store Web pages on a hard drive of the client computer for off-line browsing, the size of the HTML files and related graphics use large amounts of space and tend not to provide a browseable copy of Web pages on the client computer, since the links are likely to point back to the Web site. This is especially troublesome for "off- line" devices such as handheld computers and cellular phones that require access to downloaded resources while not connected to the network.

### SUMMARY OF THE INVENTION

The invention according to a first aspect includes a method for providing resources from a Web server to a client computer in which a Web server receives a single request from a client computer, the single request identifying a desired Web page. The Web server identifies a plurality of resources associated with the desired Web page and sends an archive file containing the plurality of resources to the client computer. In one embodiment, the Web server compresses the plurality of resources into the archive file. In another embodiment, the Web server selects the archive file from a plurality of archive files. The Web server may also identify additional Web pages associated with the desired Web page, and include the resources for these Web pages in the archive file. The archive file may also contain a site map and metadata for the Web pages.

### BRIEF DESCRIPTION OF THE DRAWINGS

Preferred embodiments of the present invention will now be described in more detail, by way of example only, with reference to the accompanying drawing in which:
FIG. 1 is a diagrammatic representation of a distributed computer system incorporating the method of the present invention;
FIG. 2 a diagrammatic representation of a Web site stored on the Web server of FIG. 1;
FIG. 3 is a diagrammatic representation of an HTTP request and response sequence between the client computer and the Web server including an OFFLINE method request of the present invention;
FIG. 4 is a diagrammatic representation of an HTTP request and response sequence between the client computer and the Web server including an SITEMAP method request of the present invention; and
FIG. 5 is a diagrammatic representation of an HTTP request and response sequence between the client computer and the Web server including an METADATA method request of the present invention.

### DETAILED DESCRIPTION OF PREFERRED EMBODIMENTS

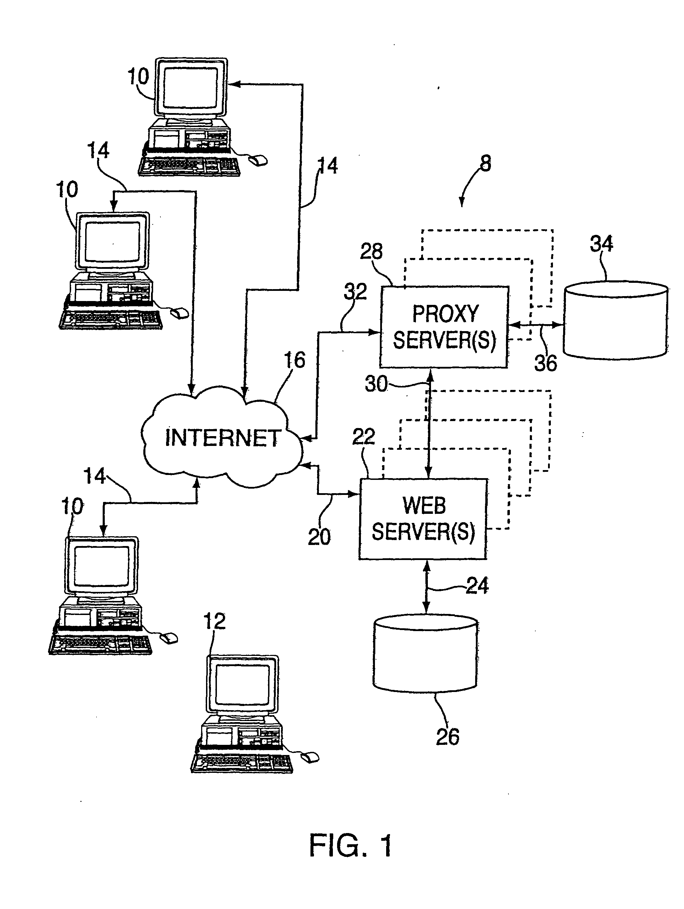

Referring now to FIG. 1, a diagrammatic representation of a distributed computer system incorporating the method of the present invention is generally shown at 8. A plurality of client computers 10 are shown connected by symbolic arrows 14 to the Internet 16. These connections 14 are typically achieved through a local area network (LAN) or telephony device well known in the art. A mobile client computer 12 is shown disconnected from the Internet 16. The functionality of the connected client computers 10 and the disconnected mobile client computer 12 is generally the same. The mobile client computer, for example may be an IBM THINKPAD ™, running LINUX as an operating system, a number of business application programs, an Internet browser such as the Microsoft™ Internet Explorer, and Internet connection software such as the IBM Global Network Dialer. In this preferred embodiment the browser is capable of interpreting a Web page having HTML tags and Java Scripts. The disconnected mobile client computer 12 has the capability to connect to the Internet 16 either through a LAN or telephony device when desired by a user.

The Internet is connected to at least one Web server 22, either directly at 20 or through one or more proxy servers 28 via connections 30 and 32. The Web server 22 is connected at 24 to at least one hard disk 26. The hard disk 26 contains an operating system, configuration files, log files, Web application programs, Web pages, Common Gateway Interface (CGI) Scripts, and various resources for the Web pages. The Web pages for the present embodiment contain HTML tags and Java Scripts. The CGI Scripts of the Web server 22 employ data processing techniques capable of executing non-HTML tasks, as is well known in the art.

The proxy server 28 is connected at 36 to at least one hard disk 34. The hard disk 34 contains an operating system, configuration files, log files, and Web application programs. The hard disk 34 also contains HTTP proxy programs that act as intermediaries between client computers 10 and 12 and the Web server 22. Proxy server 28 is commonly used as a firewall for the Web server and its local area network (LAN).

Data flow between a client computer 10 and a Web server 22 through the Internet 16 is conducted through a series of HTTP requests and responses. A user operating the client computer 10 makes a connection 14 to the Internet 16, for example from a telephony device, using the Web browser program installed on the client computer 10. Once in the connect mode, the user enters the URL for the Web server 22 into the Web browser. The Web browser opens a connection to the Web browser and then sends an HTTP request message through the Internet 16 and through connection 20 to the specific Web server 22. The HTTP request message includes the URL to identify the path of the desired resource in hard disk 26 of the Web server. The Web server 22 obtains the resource from the hard disk 26 and returns a response message containing the requested resource to the Browser of the client computer 10 via the Internet 16. The resource is then stored in a memory device (ROM or RAM) in the client computer 10, where the Web browser can retrieve it.

If a connection is made via proxy server 28, the proxy server 28 receives requests from clients, and forwards those requests to the intended Web server 22. The responses pass back through the proxy server 28 the same way.

In HTTP 1.0 and earlier, connections between the client computer 10 and Web server 22 are closed after each request and response, so each resource to be retrieved requires a new connection. In HTTP 1.1, the connection is persistent, allowing the client computer 10 to send a series of requests (called pipelining), which the Web server 22 will respond to before the connection is closed.

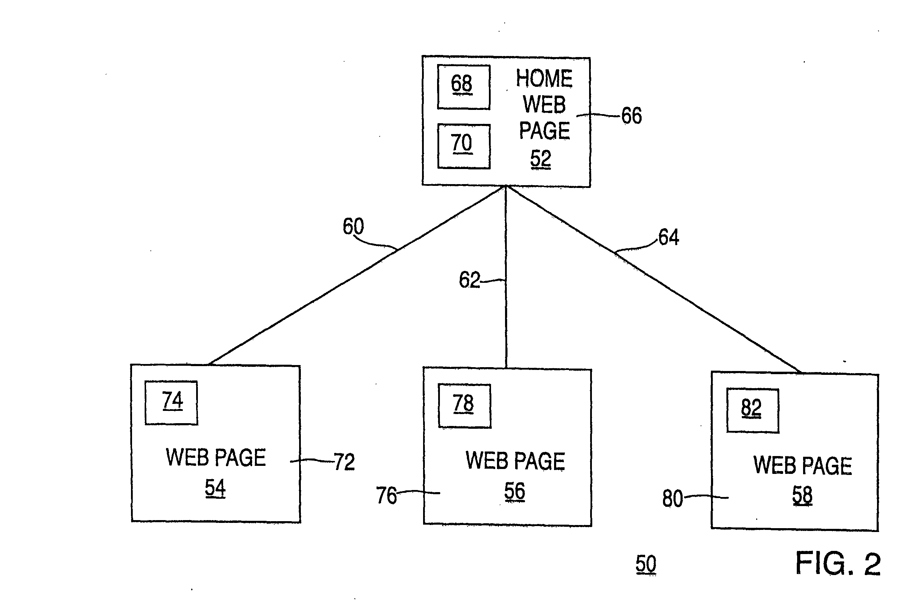

FIG. 2 a diagrammatic representation of a Web site 50 stored in the Web server 22 of FIG. 1. Web site 50 includes a parent Web page 52 and a plurality of child Web pages 54, 56, and 58. Parent Web page 52 is, in this example, the home page of the Web site 50 because parent page 52 is the first Web page that a client user is presented with after he or she first establishes a connection with the Web server 22.

The child Web pages 54, 56, and 58 are related to the parent Web page through links 60, 62, and 64. Once the client computer 10 has received the parent Web page 52, the client user can browse the Web site 50 by selecting any of the links 60, 62, or 64 to view the desired child Web page 54, 56, or 58. Child Web pages 54, 56, and 58, and parent Web page 50 each include a plurality of resources 66, 68, 70, 72, 74, 76, 78, 80, and 82. Resources 66, 72, 76, and 80 represent HTML files, and resources 68, 70, 74, 78, and 82 represent graphics, audio clips, etc, that form part of the Web pages 52, 54, 56, and 58.

Referring to FIG. 1 and FIG 2., the Web browser running on client computer 10 obtains the resources 66, 68, 70, 72, 74, 76, 78, 80, and 82 for the Web pages 52, 54, 56, and 58 by sending requests consisting of HTTP methods (commands) and headers (information about the request) to the Web server 22. As previously discussed, with HTTP methods of the prior art, each resource 66, 68, 70, 72, 74, 76, 78, 80, or 82 that the client computer 10 needs from the Web server 22 must be acquired using an individual request as the resource is needed. As a result, the client computer 10 must send nine requests to retrieve all the necessary resources to view the Web pages 52, 54, 56, and 58.

The present invention provides an "OFF-LINE" HTTP method, which is an extension to the prior art HTTP command set supported by the Web server 22. The OFF-LINE method allows Web browsers 10 to easily locate information within Web site 50, to provide for off- line browsing. The method also allows Web servers 22 to manage the content of the site 50.

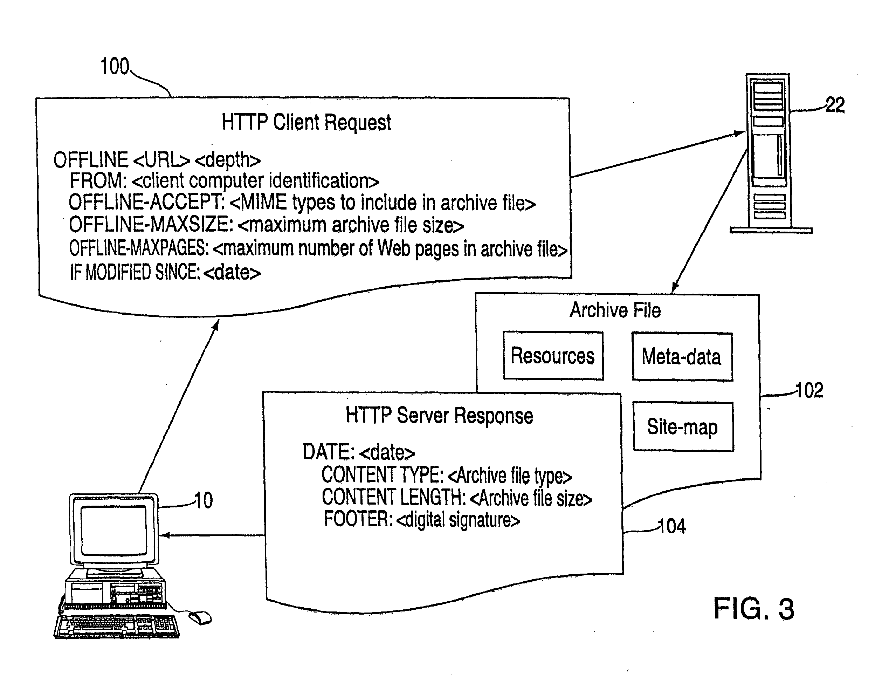

FIG. 3 is an HTTP request and response sequence between the client computer 10 and a Web server 22 including an OFFLINE method request 100 as sent from the client computer 10 to the Web server 22. When the Web server 22 receives request 100 from the client computer 10, it will first identify the Web page specified by the <URL> and all the linked (referenced) pages to a depth of <depth>. The depth is the level of ancestry from the page referenced by the URL. Using the Web site 50 of Figure 2 as an example, a depth of one would include the home page 52, a depth of two would include the home page 52 and all child pages 54, 56, and 58, and a depth of three would include the home page 52, all child pages 54, 56, and 58 and all pages in the Web site 50 directly linked to the child pages (grandchild pages) (not shown). The Web server 22 will also determine all graphics, audio clips, and other resources needed for the Web page specified by the URL and all Web pages to the indicated depth. The Web server 22 will then create a single archive file 102 containing all of the necessary resources. For example, if the URL in request 100 references the home page 52, and a depth of two is indicated, then the archive file 102 will include the resources 66, 68, 70, 72, 74, 76, 78, 80, and 82 for the Web pages 52, 54, 56, and 58. Alternatively, the Web server 22 will select a pre-packaged archive file 102 that meets the client computer's request.

The archive file 102 is created in a known format, such as that used to create a Java Archive (JAR) file or, preferably, such as that described in U.S. Patent Number 5,937,411. Such a file format supports data compression, which decreases download times to client computers 10.

In addition to the Web pages and their required resources, the archive file 102 can also contain metadata for the Web site. Metadata (information about the Web site's data) can include such information as site maps, indicating the interrelationship of the Web pages on the site. Other information that may be stored in the archive file 102 includes: keywords, parents of each page, all links in the current page, referenced resources of the current page, administrative contacts, and meta-tags. Meta-tags are special HTML tags that provide information about a Web page, usually to a search engine. Information stored in meta tags usually includes who created the page, how often it is updated, what the page is about, and which keywords represent the page's content.

An archive file 102 in the format of a JAR file will include a manifest file, as is known in the art. The manifest file contains information about the structure of other files within the JAR file. Advantageously, the manifest file can also be used to provide a digital signature for verifying the integrity of the archive file 102, to prevent tampering with the embedded content.

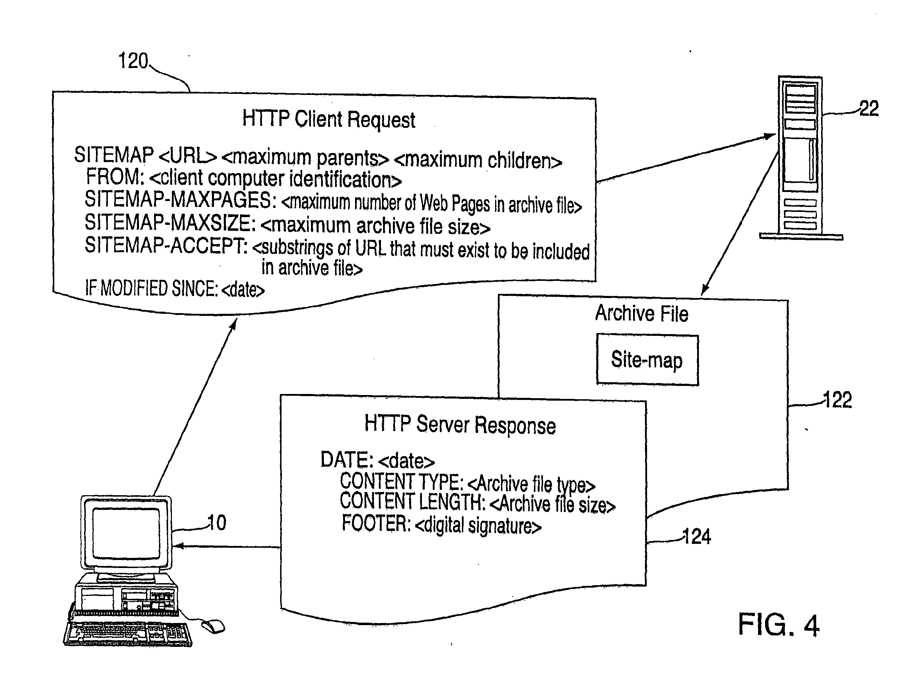

The OFFLINE request message 100 of FIG. 4 includes the headers: OFFLINE- ACCEPT, OFFLINE-MAXSIZE, OFFLINE-MAXPAGES. The information included in these headers is entered by the Web browser resident in the client computer 10 and is used by the Web server 22 to set various parameters for the archive file 102. The OFFLINE- ACCEPT header includes the various types of multi-purpose mail extensions (MIMEs) that are to be provided by the Web server 22 in archive file 102. The MIME types may be listed in comma-separated format. The OFFLINE-MAXSIZE header sets the size limit of the archive file 102 in kilobytes (KB). The OFFLINE-MAXPAGES header includes the maximum number of HTML pages that are to be included in the archive file 102.

The OFFLINE request message 100 can also include an IF MODIFIED SINCE header, as is known in the art. The IF MODIFIED SINCE header would be used if, for example, the client computer 10 had previously requested the archive file 102. The IF MODIFIED SINCE header lets the Web server 22 know the date that the archive file 102 was previously downloaded by the client computer 10 so that an unnecessary data transfer can be avoided if no changes to the Web site 50 have been made since that date. In addition, the OFFLINE request message 100 can include a FROM header, as is known in the art. The FROM header identifies the client computer 10, and can be used by the Web server 22 for security purposes. For example, the Web server 22 can deny OFFLINE requests to certain client computers 10, or can respond with different archive files 102 for different users (e.g. the archive file 102 can include a greater depth for authorized users).

After the archive file 102 is created (or after a pre-packaged archive file 102 is retrieved), the Web server sends a response message 104 containing the archive file 102 to the client computer 10. The response message 104 includes, for example, the date of the response, the type of files (e.g., type of MIME files) included in the response, the content length (in KB), and a footer. The footer can be used to provide a digital signature to verify the integrity and authenticity of the response, as is known in the art.

The archive file 102 is received by the client computer 10 and stored in the client computer's memory. At this point, the client computer 10 can sever its connection 14 to the Internet 16 and work offline (removed from any network). The Web browser resident on the client computer 10 decompresses the archive file 102. The decompressed archive file 102 includes all the resources 66, 68, 70, 72, 74, 76, 78, 80, and 82 necessary for the user of the client computer 10 to browse the Web pages 52, 54, 56, and 58, to the limits specified in the OFFLINE request message 100 or the limit dictated by the Web server 22 for OFFLINE requests.

The inclusion of meta-tags in the archive file 102 allows the Web browser in the client computer 10 to perform off-line searches for information in the Web site 50. For example, the archive file 102 may include the meta-tags and resources 66, 68, 70, 72, 74, 76, 78, 80, and 82 for all the Web pages 52, 54, 56, and 58 in the Web site 50. However, because the amount of memory available in client computer 10 may be limited, it would not be feasible to decompress every resource 66, 68, 70, 72, 74, 76, 78, 80, and 82 in the archive file 102. The meta-tags allow the browser in the client computer 10 to act as a search engine and identify the individual page 52, 54, 56, or 58 that contains the information desired by the user. Once the page is found, it can be decompressed along with the resources needed for that page.

The inclusion of meta-tags in the archive file 102 also allows the Web browser in the client computer 10 to optimize future downloads from the Web server computer 22. The amount of memory available in client computer 10 may make it undesirable to request a large archive file 102 including the resources for all Web pages 52, 54, 56, and 58 in the Web site 50. However, even where all resources are not included in the archive file, the archive file 102 can include the meta-tags for all Web pages 52, 54, 56, and 58 in Web site 50. The browser can then search the meta-tags to identify the Web page 52, 54, 56, or 58 containing the desired information and, if the page is not already in memory, establish a connection with the Web server 22 and request an archive file 102 that includes the desired resources.

The inclusion of a site map in the archive file 102 further enhances the off-line search capability of the client computer 10. The site map allows the client computer's Web browser to drill down through a Web site to find the location of the Web page containing the desired information. In addition, the Web browser can use the site map to optimize a future request for an archive file 102. For example, if a user requests information that is included in more than one Web page, the Web browser can refer to the site map to determine if the pages are interrelated (i.e. share common ancestry). If the pages are interrelated, the Web browser can alter the OFFLINE request parameters (e.g., <URL>, <depth>, OFFLINE MAXSIZE, OFFLINE MAXPAGES) to ensure that all of the pertinent Web pages are included in the archive file.

It will be recognized that archive files 102 including site-maps or meta-tags are useful for browsing on-line as well. When browsing on line, the Web browser running on client computer 10 can refer to the stored site-maps and/or meta-tags to easily locate information within Web pages 52, 54, 56, or 58 in the Web site 10, thus reducing the number of HTTP requests needed to obtain the information.

In addition to the OFFLINE method (command), the present invention also provides "SITEMAP" and "METADATA" methods. The SITEMAP and METADATA methods allow Web browsers to take advantage of the benefits of site maps and meta-tags in cases where the OFFLINE command would result in unnecessary data or where the OFFLINE command is restricted by the Web server.

FIG. 4 is an HTTP request and response sequence between the client computer 10 and a Web server 22 including a SITEMAP method request 120 as sent from the client computer 10 to the Web server 22. When the Web server 22 receives this request from client computer 10, it will first determine the Web page specified by the <URL>, all the parent pages of the specified page to a height of <maxparents>, and all the child pages to the specified page to a depth of <maxchild>. For example, if the URL identified Web page 72 in FIG. 2 with <maxparents> and <maxchild> both set to one, the resulting sitemap would identify parent Web page 52 and any child web pages linked to Web page 72 (not shown) to a depth of one. It should be noted that the siblings of Web page 72 are not included in this site map. After the sitemap is created, Web server 22 will then create a single archive file 122 containing the site map. Alternatively, the Web server 22 will select a pre-packaged archive file 122 that meets the client computer's request.

The SITEMAP request message of FIG. 4 includes the headers SITEMAP-ACCEPT, SITEMAP-MAXSIZE, SITEMAP-MAXPAGES. The information included in these headers is entered by the Web browser in client computer 10 and used by the Web server 22 to set various parameters for the archive file 122. The SITEMAP-ACCEPT header includes the sub-string of the URL that must exist to be included in the site map, thereby restricting the scope of the sitemap. For example, if the SITEMA-ACCEPT header includes the sub-string "www.uspto.gov/web", the sitemap will include all web pages having an URL that includes this sub-string (e.g., "www.uspto.gov/web/offices.html"). The SITEMAP-MAXSIZE header sets the size limit (in KB) for the archive file 122. The SITEMAP-MAXPAGES header includes the maximum number of Web pages that are to be included in the sitemap. The SITEMAP request message can also include an IF MODIFIED SINCE header and a FROM header, as described above with reference to the OFFLINE method.

After the archive file 122 is created (or after a pre-packaged archive file 122 is retrieved), the Web server 22 sends a response message 124, such as that described hereinabove with reference to Figure 3, containing the archive file 122 to the client computer 10. The archive file 122 is received by the client computer 10 and stored in memory.

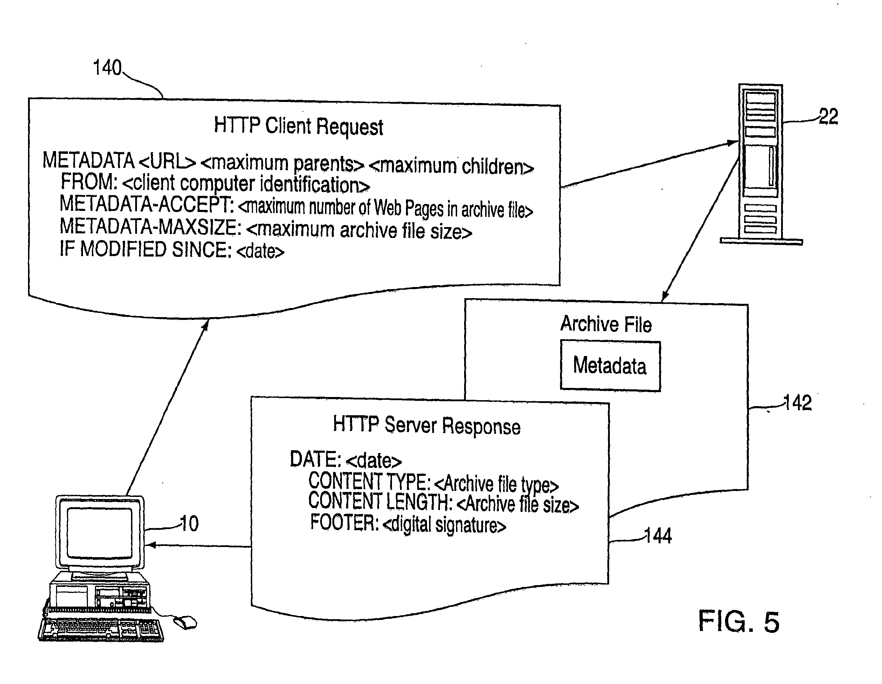

FIG. 5 is an HTTP request and response sequence between the client computer 10 and a Web server 22 including a METADATA method request 140 as sent from the client computer 10 to the Web server 22. When the Web server 22 receives this request 140 from a client computer 10, it will first determine the Web page specified by the <URL>, and then copy its meta-tag or other information such as keywords, parents, links, referenced resources, etc. After the metadata is copied, Web server 140 will then create a single archive file 142 containing the metadata. Alternatively, the Web server 22 will select a pre-packaged archive file 142 that meets the client computer's request.

The METADATA request message of FIG. 5 includes the header METADATA-ACCEPT, METADATA-MAXSIZE, IF MODIFIED SINCE, and FROM. The information included in these headers is entered by the Web browser running on the client computer 10 and used by the Web server 22 to set various parameters for the archive file 42. The METADATA- ACCEPT header includes the sub-strings of the URL that must exist to be included in the archive file 142, thereby restricting the scope of the metadata. The METADATA-MAXSIZE header sets the size limit (in KB) for the archive file 142. The IF MODIFIED SINCE and FROM headers, are as described above with reference to the OFFLINE method,

After the archive file 142 is created (or after a pre-packaged archive file 142 is retrieved), the Web server 22 sends a response message 144, such as that described herein with reference to Figure 3, containing the archive file 142 to the client computer 10. The archive file 142 is received by the client computer 10 and stored in memory.

The present invention provides extensions to the current HTTP command set (i.e. methods and headers) supported by a Web server. These methods and headers provide easier methods of locating information within a Web site, and provide for off-line browsing. In addition to these benefits, the present invention also provides an easy way to manage Web site content in a network including multiple Web servers or proxy servers.

Referring again to FIG. 1, FIG. 2, and FIG. 3, if multiple Web servers 22 each include their own hard drive 26, with each hard drive 26 storing its own copy of the Web site 50, each copy of the Web site 50 must be updated whenever changes are made to the Web site 50. The OFFLINE method of the present invention provides a way to update each copy of the Web site 50. For example, one Web server 22 can be maintained as the main Web server, with updates to the Web site 50 made directly to the copy of the Web site 50 in the main Web server's hard drive. Each of the other Web servers 22 can send OFFLINE requests 100 to the main Web server 22 at predetermined intervals to obtain any changes to the Web site 50. Alternatively, any Web server 22 could accept changes to its stored Web site 50. If a change is made to the Web site 50 stored on one Web server 22, that Web server could push the archive file 100 to the other Web servers 22 to update all copies of the Web site 50.

In systems with proxy servers 28, the OFFLINE method of the present invention can be used to provide metadata and resources to the proxy servers 28, thus allowing the proxy servers 28 to handle HTTP requests locally instead of passing it to the Web server 22. Upon receiving the OFFLINE request 100 from the client computer 10, the proxy server 28 would re-map the URL and respond to the client computer 10 with the pre-packaged archive file 102. Allowing the proxy servers 28 to handle requests locally will increase the response time for users of the proxy servers 28 and will and decrease load on the original Web server 22 while ensuring the content is correct and secure.

The OFFLINE method is also useful for the commercial distribution of information between a supplier, providing information from Web server 22, and subscribers, receiving information on client computers 10. Subscribers of the information can receive the information periodically either by sending an OFFLINE request 100 to the Web server 22, or by having the Web server 22 push the archive file 102 to the subscriber's computer 10.

The present invention can be embodied in the form of computer-implemented processes and apparatuses for practicing those processes. The present invention can also be embodied in the form of computer program code containing instructions embodied in tangible media, such as floppy diskettes, CD-ROMs, hard drives, or any other computer-readable storage medium, wherein, when the computer program code is loaded into and executed by a computer, the computer becomes an apparatus for practicing the invention. The present invention can also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

Particular aspects of the present invention include:
1. A method for providing resources from a Web server to a client computer, the method comprising:
   receiving a single request from a client computer, the single request identifying a desired Web page;
   including a plurality of resources associated with the desired Web page in an archive file; and
   sending the archive file to the client computer in response to the single request.
2. A method for providing resources from a Web server to a client computer, the method comprising:
   receiving a single request from a client computer, the single request identifying a desired Web page;
   generating a site map including the desired Web page; and
   sending an archive file containing the site map to the client computer in response to the single request.
2(1). This method may include:
   receiving a sub-string of an URL from the client computer; and
   wherein said generating the site map includes identifying Web pages with an URL including the sub-string.
2(2). This method may include:
   receiving a value from the client computer; and
   limiting a number of Web pages in the site map to the value.
3. A method for providing resources from a Web server to a client computer, the method comprising:
   receiving a single request from a client computer, the single request identifying a desired Web page; and
   sending an archive file containing metadata from the desired Web page to the client computer in response to the single request.
4. A method for providing resources from a Web server to a client computer, the method comprising:
   establishing a connection with a Web server;
   sending a single request to the Web server, the single request identifying a desired Web page;
   receiving an archive file containing a plurality of resources associated with the desired Web page;
   breaking the connection with the Web server;
   decompressing the plurality of resources associated with the desired Web page; and
   displaying the Web page after said breaking the connection.
4(1). In one implementation of this method:
   the archive file contains a plurality of resources associated with an additional Web page linked to the desired Web page, and the method further includes displaying the additional Web page after breaking the connection. 4(2). In one implementation, this method includes:
      indicating a size value in the single request, the size value indicating the maximum size of the archive file.
4(3). In one implementation:
   the archive file contains metadata for the desired Web page, and the method includes searching the metadata after said breaking the connection.
4(4). In one implementation:
   the metadata is selected from the group comprising: keywords found in the desired Web page, parent Web pages of the desired Web page, child Web pages of the desired Web page, links found in the desired Web page, administrative contacts for the desired Web page, and meta-tags found in the desired Web page.
4(5). In one implementation:
   the archive file contains a site map including the desired Web page, and the method includes searching the site map after breaking the connection.
5. A method for providing resources from a Web server to a client computer, the method comprising:
   sending a single request to a Web server, the single request identifying a desired Web page;
   receiving an archive file containing a site map including the desired Web page; and
   searching the site map.
6. A method for providing resources from a Web server to a client computer, the method comprising:
   sending a single request to a Web server, the single request identifying a desired Web page;
   receiving an archive file containing the metadata for the desired Web page; and
   searching the metadata.
7. A computer program, suitable for storing on a machine-readable storage medium, comprising program code for controlling the operation of a data processing apparatus on which it executes, for providing resources from a Web server to a client computer, the program code including instructions for causing a computer to implement a method comprising:
   receiving a single request from a client computer, the single request identifying a desired Web page;
   including a plurality of resources associated with the desired Web page in an archive file; and
   sending the archive file to the client computer in response to the single request.
8. Another aspect of the invention provides a computer program, or a storage medium having computer program code recorded thereon, for controlling the operation of data processing apparatus on which it runs, to perform any one of the methods described above.
9. Another aspect of the invention provides a system for providing information from a Web server to a client computer, the system comprising:
   a Web server;
   a storage device coupled to said web server;
   a web site stored in said storage device, said web site comprising a plurality of HTML pages and a plurality of resources referenced by said plurality of HTML pages;
   a network connected to said web server;
   a client computer connected to said network, said client computer configured to provide a single HTTP request to said Web server, said single HTTP request identifying a desired HTML page in said web site, said Web server configured to identify a plurality of resources associated with said desired HTML page and send an archive file containing said plurality of resources associated with said desired HTML page to said client computer via said network.
10. Another aspect provides a system for providing information from a Web server to a client computer, the system comprising:
   a Web server;
   a storage device coupled to said web server;
   a web site stored in said storage device, said web site comprising a plurality of HTML pages and a plurality of resources referenced by said plurality of HTML pages;
   a network connected to said web server;
   a client computer connected to said network, said client computer configured to provide a single HTTP request to said Web server, said single HTTP request identifying a desired HTML page in said web site, wherein the Web server is configured to implement any of the server-implemented methods described above.

Any of these aspects 1-10 above may be implemented together with specific ones of the following features:
A. Compressing the plurality of resources associated with the desired Web page into the archive file.
B. Selecting the archive file from a plurality of archive files.
C. Including a plurality of resources associated with an additional Web page in the archive file.
D. Receiving a depth value from the client computer; identifying a plurality of additional Web pages associated with the desired Web page; limiting a number of Web pages in the plurality of additional Web pages using the depth value; and including the plurality of resources associated with the limited number of Web pages in the archive file.
E. Receiving a size value from the client computer; and limiting the size of the archive file to the size value.
F. Including metadata from the desired Web page in the archive file.
G. The metadata may be selected from a group comprising: keywords found in the desired Web page, parent Web pages of the desired Web page, child Web pages of the desired Web page, links found in the desired Web page, administrative contacts for the desired Web page, and meta-tags found in the desired Web page.
H. Including a site map in the archive file.
I. Authenticating a manifest file; and including the manifest file in the archive file.

## Claims

1. A method for providing resources from a Web server to a client computer, the method comprising:
receiving a single request from a client computer, the single request identifying a desired Web page;
including a plurality of resources associated with the desired Web page in an archive file; and
sending the archive file to the client computer in response to the single request.

2. The method of claim 1, further comprising:
compressing the plurality of resources associated with the desired Web page into the archive file.

3. The method of claim 1, further comprising:
selecting the archive file from a plurality of archive files.

4. The method of any one of claims 1 to 3, further comprising:
including a plurality of resources associated with an additional Web page in the archive file.

5. The method of claim 2, further comprising:
receiving a depth value from the client computer;
identifying a plurality of additional Web pages associated with the desired Web page;
limiting a number of Web pages in the plurality of additional Web pages using the depth value; and
including the plurality of resources associated with the limited number of Web pages in the archive file.

6. The method of any preceding claim, further comprising:
receiving a size value from the client computer; and
limiting the size of the archive file to the size value.

7. The method of any preceding claim, further comprising:
including metadata from the desired Web page in the archive file.

8. The method of any preceding claim, wherein the metadata is selected from a group comprising:
keywords found in the desired Web page, parent Web pages of the desired Web page, child Web pages of the desired Web page, links found in the desired Web page, administrative contacts for the desired Web page, and meta-tags found in the desired Web page.

9. The method of any preceding claim, further comprising:
including a site map in the archive file.

10. The method of claim 1, further comprising:
authenticating a manifest file; and
including the manifest file in the archive file.

11. A method according to any preceding claim, including:
establishing a connection with a Web server;
sending a single request to the Web server, the single request identifying a desired Web page;
receiving an archive file containing a plurality of resources associated with the desired Web page;
breaking the connection with the Web server;
decompressing the plurality of resources associated with the desired Web page; and
displaying the Web page after breaking the connection.

12. A computer program, comprising program code for controlling the operation of a data processing apparatus on which it executes, for providing resources from a Web server to a client computer, the program code including instructions for causing a computer to implement a method comprising:
receiving a single request from a client computer, the single request identifying a desired Web page;
including a plurality of resources associated with the desired Web page in an archive file; and
sending the archive file to the client computer in response to the single request.

13. A system for providing information from a Web server to a client computer, the system comprising:
a Web server;
a storage device coupled to said web server;
a web site stored in said storage device, said web site comprising a plurality of HTML pages and a plurality of resources referenced by said plurality of HTML pages;
a network connected to said web server;
a client computer connected to said network, said client computer configured to provide a single HTTP request to said Web server, said single HTTP request identifying a desired HTML page in said web site, said Web server configured to identify a plurality of resources associated with said desired HTML page and send an archive file containing said plurality of resources associated with said desired HTML page to said client computer via said network.
